# EUROPÄISCHE PATENTSCHRIFT

(11) **EP 1 524 057 B1**
(45) Veröffentlichungstag und Bekanntmachung des Hinweises auf die Patenterteilung: **24.08.2011**
(21) Anmeldenummer: 04022335.6
(22) Anmeldetag: 20.09.2004
(51) Int. Cl.: B23G 1/18

(54) **Werkzeugtreiberaggregat, insbesondere für den Antrieb eines Gewindefertigungswerkzeugs in einer Gewindefertigungsvorrichtung**
Tool driving assembly, especially for driving a thread finishing tool of a thread-finishing device
Ensemble d'actionnement pour un outil, notamment pour actionner un outil pour le finissage des filets dans un dispositif de finissage des filets

(30) Priorität: 13.10.2003 DE 10347423
(43) Veröffentlichungstag der Anmeldung: 20.04.2005
(73) Patentinhaber: Otto Bihler Handels-Beteiligungs-GmbH, 87642 Halblech (DE)
(72) Erfinder: Bihler, Mathias, 87642 Halblech (DE); Köpf, Johann, 87642 Halblech (DE)
(74) Vertreter: Tiesmeyer, Johannes

(56) Entgegenhaltungen:
- EP-A- 1 101 555
- EP-B- 0 220 973
- DE-A1- 2 801 305
- DE-A1- 4 313 804
- FR-A- 2 094 295
- US-A- 3 124 979
- US-A- 3 838 934
- PATENT ABSTRACTS OF JAPAN Bd. 1998, Nr. 01, 30. Januar 1998 (1998-01-30) -& JP 09 253967 A (OKUMA MACH WORKS LTD), 30. September 1997 (1997-09-30)

## Beschreibung

Die Erfindung betrifft ein Werkzeugtreiberaggregat, insbesondere für den Antrieb eines Gewindefertigungswerkzeugs in einer Gewindefertigungsvorrichtung gemäß dem Oberbegriff von Anspruch 1.

Die hier betrachteten Werkzeugtreiberaggregate dienen dazu, stiftartige Werkzeuge, wie etwa Gewindeformer, Gewindebohrer oder dgl., sowohl rotierend als auch axial beweglich in einer der jeweiligen Werkzeugbearbeitungssituation angepassten Weise anzutreiben.

Ein derartiges Aggregat ist aus der FR 2 094 295 B bekannt, bei dem eine Rückstellung einer Spindel durch einen doppelt wirkenden Pneumatikzylinder erfolgt. Dabei erfolgt die Zustell- bzw. Rückstellbewegung dadurch, dass der gleich hohe pneumatische Druck auf unterschiedlich große Flächen des Kolbens in voneinander getrennten Kammern wirkt.

Ferner wird auf die EP 1 101 555 A2 hingewiesen.

Aufgabe der vorliegenden Erfindung ist es, ein Werkzeugtreiberaggregat der vorstehend erwähnten Art bereitzustellen, welches schnell ablaufende Arbeitszyklen aus Vorschub-, Rückzugs- und Rotationsbewegungen des Werkzeugs, insbesondere für Werkstückbearbeitung im Hochdurchsatzbetrieb ermöglicht, wobei insbesondere eine schnellere Rückzugsbewegung erreicht werden soll.

Zur Lösung dieser Aufgabe wird ein Werkzeugtreiberaggregat gemäß Anspruch 1 vorgeschlagen.

Die Spindel, die als Kolben eines Zylinder-Kolben-Antriebs funktionalisiert ist, ermöglicht rasche Zustellbewegungen des Werkzeugs zu dem zu bear beitenden Werkstück und ebenso rasche Rückzugsbewegungen von dem Werkstück nach dessen Bearbeitung, wobei diese Zustell- und Rückzugsbewegungen unabhängig vom Drehzustand der Spindel erfolgen können, solange und sobald das Werkzeug vom Werkstück frei ist.

Gemäß einer bevorzugten Ausführungsform der Erfindung weist die Drehantriebseinrichtung eine zur Rotation angetriebene Drehmitnahmehülse auf, die mit der Spindel zur gemeinsamen Drehung gekoppelt ist, wobei die Drehmitnahmehülse als Zylinderteil des Zylinder-Kolben-Antriebs der Axialvorschubund Rückholeinrichtung die Spindel axial bewegbar lagert. Die Spindel und die Drehmitnahmehülse haben einander komplementäre und miteinander in Drehmitnahmeeingriff stehende Keilwellenverzahnungen oder Polygonbereiche. Auf diese Weise ist eine formschlüssige Drehmitnahmekopplung zwischen Drehmitnahmehülse und Spindel gewährleistet, wobei die Spindel jedoch für die Zustellbewegungen und Rückzugsbewegungen des Werkzeugs axial relativ zur Drehmitnahmehülse verschiebbar an dieser geführt ist.

Die Spindel sollte möglichst gut abdichtend in der Drehmitnahmehülse aufgenommen sein, um zu vermeiden, das Druckfluid des Zylinder-Kolben-Antriebs längs der Spindel nach außen entweichen kann.

Vorzugsweise ist die Spindel auswechselbar in dem Treibergehäuse aufgenommen - und durch Herausziehen aus ihrer Axialführung, nämlich durch Herausziehen aus der Drehmitnahmehülse aus dem Treibergehäuse entfernbar. Das Auswechseln einer Spindel mit Werkzeug kann somit auf einfache Weise und schnell vorgenommen werden.

Gemäß einer vorteilhaften Weiterbildung der Erfindung ist wenigstens ein Magnet, vorzugsweise Permanentmagnet, in oder an dem Treibergehäuse so vorgesehen, dass er mit der Spindel magnetisch wechselwirken kann, um sie am Herausfallen aus dem Treibergehäuse zu hindern. Der Magnet kann gemäß einer Variante der letztgenannten Ausführungsform die einzige Verliersicherung für die Spindel sein.

Gemäß einer Ausführungsform der Erfindung hat die Spindel an ihrer axial vorderen Seite, nämlich der Werkzeugaufnahmeseite, eine Wechselspannvorrichtung für das Werkzeug. Ein betreffender Gewindeformer oder dgl. kann somit bei Bedarf ausgetauscht werden. Da das Auswechseln der Spindel mit Werkzeug in der schon erwähnten Weise schnell und unproblematisch möglich ist, wird es zweckmäßig sein, den Werkzeugwechsel an der Spindel bei aus dem Werkzeugtreiberaggregat herausgenommener Spindel vorzunehmen. Währenddessen kann schon eine mit neuem Werkzeug vorbereitete andere Spindel in dem Werkzeugtreiberaggregat zum Einsatz kommen.

Bei einer anderen Variante der Erfindung ist die Spindel integraler Bestandteil des Werkzeugs. Die in diesem Fall einstückig mit dem Werkzeugkopf zusammenhängende Spindel ist somit der Werkzeugschaft, welcher unmittelbar in die Drehmitnahmehülse eingesteckt werden kann.

Als Drehantriebsquelle der Drehantriebseinrichtung kommt vorzugsweise ein Hohlwellenelektromotor, insbesondere ein nummerisch steuerbarer Motor (NC-Motor) zum Einsatz, wobei die als Hohlwelle ausgebildete Motorwelle die Drehmitnahmehülse ist. Eine solche Ausführungsform der Erfindung ist mit sehr wenigen, zum Teil am Markt erhältlichen und im Übrigen unkompliziert herstellbaren Komponenten realisierbar.

In einer alternativen Ausführungsform der Erfindung wird die Drehmitnahmehülse über ein Getriebe von einem Motor, insbesondere Elektromotor, angetrieben. Als Getriebe kommt z.B. ein Kegelradgetriebe in Frage, wobei eines der Kegelräder z.B. am Außenumfang der Drehmitnahmehülse vorgesehen sein kann.

Wenngleich für bestimmte Anwendungen ein hydraulischer Zylinder-Kolben-Antrieb für die Axialbewegungen der Spindel zweckmäßig sein kann, so wird im Übrigen jedoch ein pneumatischer Zylinder-Kolben-Antrieb bevorzugt. Der Zylinder-Kolben-Antrieb ist gemäß der Erfindung nach Art eines einfach wirkenden Zylinder-Kolben-Antriebs mit nur einer Zylinderkammer ausgeführt, wobei eine axial rückwärtige Seite der Spindel diese Zylinderkammer des Zylinder-Kolben-Antriebs begrenzt. Die Spindel ist somit an ihrer rückwärtigen, also der Werkzeugaufnahmeseite entgegengesetzten Seite mit dem Druck eines der Zylinderkammer zuzuführenden Druckmediums, insbesondere Luft, zu beaufschlagen, um einen Spindelvorschub zu erzeugen. Dies kann gemäß einer Ausführungsform der Erfindung gegen die permanente Wirkung einer die Spindel zu ihrer eingezogenen Stellung hin vorspannenden Kraft, z.B. einer Federkraft oder einer magnetischen Kraft, erfolgen.

Es ist eine mit einer Pumpe für das Druckmedium in Verbindung stehende Ventilsteuereinrichtung vorgesehen, mittels welcher das Druckmedium wechselweise in die Zylinderkammer gepumpt und gemäß der Erfindung aus der Zylinderkammer gesaugt werden kann, um abwechselnd einen die Spindel axial vorschiebenden Überdruck und einen die Spindel zur axialen Rückwärtsbewegung veranlassenden Unterdruck in der Zylinderkammer zu erzeugen. Die Zylinderkammer wird erfindungsgemäß somit nicht nur auf Außendruckniveau entlüftet, sondern sogar evakuiert, so dass der Luftdruck außen an der Werkzeugaufnahmeseite der Spindel größer ist als der Druck an der die Zylinderkammer begrenzenden rückwärtigen Spindelseite, mit der Folge, dass sich die Spindel wieder in ihre Rückzugsposition begibt. Sollte das Werkzeugtreiberaggregat dann ausgeschaltet werden und sich zwischen den beiden Endseiten der Spindel ein Druckausgleich einstellen, so sorgt ein am Treibergehäuse vorgesehener Magnet, wie er bereits oben angesprochen wurde, durch magnetische Wechselwirkung mit der Spindel dafür, dass die Spindel in ihrer Rückzugsstellung verbleibt und somit nicht aus dem Treibergehäuse herausfallen kann. Weitere Verliersicherungen für die Spindel sind im Grunde genommen nicht erforderlich, können aber ggf. vorgesehen sein.

Die Drehantriebsvorrichtung ist gemäß einer bevorzugten Ausführungsform der Erfindung so steuerbar, dass sie den Drehsinn der Spindel wechselweise ändert. Dabei können Wechsel zwischen Vorschubbewegung und Rückzugsbewegung der Spindel mit einer jeweiligen Umkehrung des Drehsinns der Spindel zumindest näherungsweise synchronisierbar sein. Eine solche Betriebsweise kann z.B. bei der Gewindefertigung mit einem Gewindeformer oder einem Gewindebohrer mit schnellem Zyklus und somit bedarfsweise kurzen Taktzeiten bei der Gewindefertigung ausgenutzt werden. Aufgrund des vorteilhaften Antriebskonzeptes kann das Werkzeugtreiberaggregat nach der Erfindung insbesondere beim Gewindeformen große Vorteile mit sich bringen. Beim Gewindeformen wird das Werkzeug, der Former, in einer Schraubbewegung in die Vorbohrung des Werkstücks eingedreht. Der Werkstoff weicht aus, fließt in die Zahnlücken des Formers und bildet dabei spanlos das charakteristische Gewindeprofil aus. Es kann somit ein Innengewinde auf spanlose Weise in einem Werkstück erzeugt werden. Dabei kommt es darauf an, dass der Gewindeformer ein bedarfsweise großes Drehmoment aufbringen kann, um diesen Materialfließvorgang auszulösen. Andererseits kommt es nicht so sehr auf eine starke Axialvortriebskraft an, da der Gewindeformer aufgrund der Steigung seiner Komplementärgewindezüge beim Eindrehen in die Vorbohrung des Werkstücks im Wesentlichen selbst für den Vortrieb sorgt. Es hat sich als besonders vorteilhaft im Sinne der störungsfreien Herstellung maßhaltiger Gewinde herausgestellt, dass ansonsten nur die pneumatische (oder ggf. im Sonderfall hydraulische) Vorschubkraft und nicht eine starre mechanische Zwangsvorschubkraft in axialer Richtung auf das Werkzeug wirkt.

Der Bewegungsablauf des Werkzeugs und der Spindel beim Gewindeformen wird folgender sein. Das Werkstück wird in axial fluchtender Lage zum Werkzeug bereitgestellt und fixiert. Die Drehantriebseinrichtung treibt die Spindel zur Bewegung mit dem für das Eindrehen des Gewindeformerkopfes in die Vorbohrung des Werkzeugs erforderlichen Drehsinn an und der pneumatische Zylinder-Kolben-Antrieb sorgt für die axiale Zustellbewegung der Spindel zum Werkstück durch Beaufschlagung der rückwärtigen Seite der Spindel mit einem pneumatischen Druckmedium, vorzugsweise Druckluft. Sobald der Gewindeformer dann hinreichend weit in das Werkstück eingedreht worden ist, wird die Drehantriebseinrichtung den Drehsinn der Spindel und des Werkzeugs umkehren. Im Wesentlichen synchron dazu wird der Zylinder-Kolben-Antrieb die Spindel wieder zurückziehen, indem die Zylinderkammer nun evakuiert wird. Das Werkzeug wird dabei aus dem frisch gefertigten Gewinde herausgeschraubt und dann aufgrund des Saugeffektes des Zylinder-Kolben-Antriebs weiter zurück vom Werkstück gezogen. Sobald das Werkzeug vom Werkstück frei ist, kann ein nächstes mit einem Gewinde zu versehendes Werkstück in die betreffende Bearbeitungsposition gebracht werden.

Bei den Werkstücken kann es sich z.B. um Blechteile oder Mutterrohlinge für Schrauben handeln.

Ein Ausführungsbeispiel der Erfindung wird im Folgenden unter Bezugnahme auf die Figuren näher erläutert.

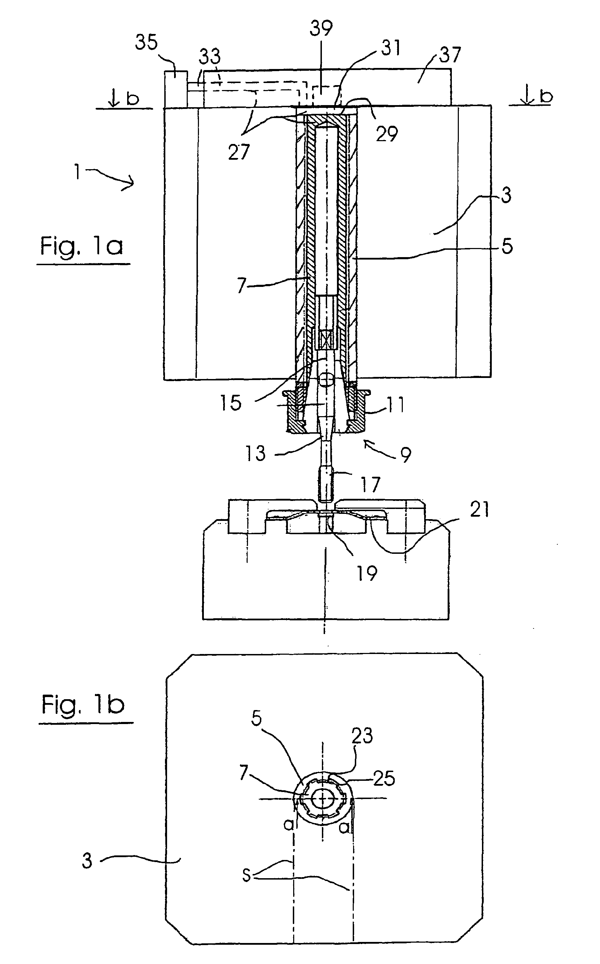

- Fig. 1a: zeigt eine Seitenansicht eines Werkzeugtreiberaggregates in einer Teilschnitt-Darstellung mit dem in Fig. 1b bei S eingezeichneten Schnittverlauf, wobei in Fig. 1a ferner eine Werkstückhalterung mit einem darin aufgenommenen und zur Bearbeitung vorgesehenen Werkstück dargestellt ist.
- Fig. 1b: zeigt eine Draufsicht auf das Werkzeugtreiberaggregat aus Fig. 1a mit Blick auf die in Fig. 1a bei b-b angedeutete Ebene, wobei die in Fig. 1a erkennbare Luftanschlussplatte und die damit verbundene pneumatische Steuereinheit abgenommen sind.

Das in den Figuren gezeigte Werkzeugtreiberaggregat 1 ist Hauptkomponente einer Gewindefertigungsvorrichtung und umfasst einen NC-Hohlwellenelektromotor 3 mit einer als Hohlwelle ausgebildeten Motorwelle 5.

Die Hohlwelle 5 ist als Drehmitnahmehülse für eine darin aufgenommene Spindel 7 ausgebildet. Die Spindel 7 ist der Werkzeughalter. Sie weist an ihrer in Fig. 1a unten liegenden Vorderseite 9 eine Wechselspannvorrichtung 11 auf, die an sich bekannt ist und daher nicht näher erläutert werden muss. Das Werkzeug 13 ist mit seinem Polygonschaft 15 in einer Axialbohrung der Spindel 7 aufgenommen und mittels der Wechelspannvorrichtung 11 so eingespannt, dass es zur gemeinsamen Drehung mit der Spindel 7 gekoppelt und relativ zur Spindel unverschiebbar ist. Axial außerhalb der Spindel liegt der Gewindeformerkopf 17 des Werkzeugs 13. In dem Beispielsfall gemäß Fig. 1 a ist der Gewindeformerkopf 17 zu einer Vorbohrung 19 in einem Werkstück 21 axial fluchtend ausgerichtet.

Die Spindel 7 hat ein Keilwellenaußenprofil 23 (vgl. Fig. 1b), welches mit einem komplementären Keilwelleninnenprofil 25 (vgl. Fig. 1 b) der von der Motorwelle 5 gebildeten Drehmitnahmehülse in Drehmitnahmeeingriff steht.

Bei Drehung der Motorwelle 5 wird somit die Spindel 7 zwangsweise mitgedreht.

Da der vorstehend erläuterte Keilwellenprofileingriff zwischen der Motorwelle 5 und der Spindel 7 keine Störkontur hinsichtlich einer Bewegung der Spindel in axialer Richtung beinhaltet, kann der somit unabhängig von dem Drehzustand der Spindel nutzbare Axialbewegungsfreiheitsgrad für eine flexible Axialvortriebs- und Rückbewegungssteuerung der Spindel benutzt werden. Dies erfolgt erfindungsgemäß dadurch, dass die Spindel 7 Kolbenteil eines pneumatischen Zylinder-Kolben-Antriebs 27 für den Axialvorschub und den Rückzug der Spindel 7 ist. Gemäß Fig. 1 a begrenzt die Spindel 7 mit ihrer rückwärtigen Seite 29 eine pneumatische Zylinderkammer 31, deren Volumen bei Abwärtsbewegung der Spindel 7 größer wird. Die Zylinderkammer 31 ist über die pneumatische Leitung 33 von einem Steuerventil 35 aus mit Druckluft zu beschicken, so dass der sich dabei in der Zylinderkammer 31 aufbauende erhöhte Luftdruck eine Vortriebskraft auf die als Kolben fungierende Spindel 7 ausübt. Die Spindel 7 bewegt sich dann aus ihrer in Fig. 1a gezeigten Rückzugsstellung zum Werkstück 21 hin. Dies erfolgt normalerweise bei bereits zur Drehung angetriebener Motorwelle 5, so dass das Werkzeug 13 in rotierendem Zustand das Werkstück 21 erreicht. Der Gewindeformerkopf 17 dreht sich dabei in die Vorbohrung 19 ein und erzeugt das gewünschte Innengewinde im Bereich der Vorbohrung 19 des Werkstücks 21. Nach einer vorbestimmten Anzahl an Umdrehungen während des Eindrehvorgangs wird der NC-Elektromotor 3 so angesteuert, dass er den Drehsinn der Motorwelle 5 umkehrt. Das Werkzeug kann dabei nunmehr geführt durch das im Werkstück 21 hinterlassene Gewinde aus dem Werkstück 21 herausgeschraubt werden. Mit der Umkehrung des Drehsinns der Motorwelle 5 und der damit gekoppelten Spindel 7 einhergehend wird die pneumatische Steuereinrichtung 35 eine Ventileinstellung vornehmen, gemäß welcher eine (nicht gezeigte) Pumpe nunmehr die Zylinderkammer 31 evakuiert, um ein Vakuum zu erzeugen. Dabei entsteht ein Druckungleichgewicht zwischen der Vorderseite 9 und der rückwärtigen Seite 29 der Spindel 7, welches die Spindel 7 zur Rückkehr in die in Fig. 1a gezeigte Rückzugsstellung veranlasst. In dieser Rückzugsstellung ist das Werkzeug 13 von dem Werkstück 21 separiert, so dass das Werkstück 21 gegen ein neues Werkstück ausgetauscht werden kann.

Mit 37 ist in Fig. 1a eine Luftanschlussplatte gekennzeichnet. Die Luftanschlussplatte 37 dichtet die Zylinderkammer 31 an der der Spindelseite 29 entgegengesetzten Seite nach außen ab. Sie enthält jedoch die Pneumatikleitung 33, durch die hindurch Druckluft in die Zylinderkammer 31 eingeleitet und danach zur Erzeugung des Unterdrucks wieder aus der Zylinderkammer 31 herausgesaugt wird. Das Einbringen und Ausbringen der Druckluft erfolgt über das Steuerventil 35, welches an der Pumpe angeschlossen ist.

Vorzugsweise ist diese Pumpe je nach Einstellung des Steuerventils 35 für den Druckaufbau und für den Druckabbau in der Zylinderkammer 31 zuständig.

Mit 39 ist in Fig. 1 a ein Permanentmagnet gekennzeichnet. Dieser in der Luftanschlussplatte 37 in Gegenüberlage zu der rückwärtigen Seite 29 der Spindel 7 untergebrachte Magnet 39 dient dazu, eine magnetische Anziehungskraft auf die Spindel 7 auszuüben und diese gegen Herausfallen aus der Treiberhülse (= Motorwelle 5) zu sichern. Einer weiteren Verliersicherung bedarf es für die Spindel 7 eigentlich nicht. Die erfindungsgemäße Konstruktion erlaubt daher ein sehr rasches Wechseln der Spindel 7 mit dem darin aufgenommenen Werkzeug 13 durch Herausziehen der Spindel 7 aus der Drehmitnahmehülse 5. Hierzu ist vorweg lediglich der für das Herausziehen erforderliche Weg unterhalb des Werkzeugtreiberaggregates 1 freizumachen. Beim Herausziehen der Spindel 7 aus der Drehmitnahmehülse 5 ist lediglich die Rückhaltekraft des Magneten 39 zu überwinden, was jedoch keine großen Schwierigkeiten bereitet. In entsprechend schneller Weise kann eine neue Spindel mit einem neuen Werkzeug in die Drehmitnahmehülse 5 axial eingesteckt werden, so dass sie dann für ihren Einsatz im Werkzeugtreiberaggregat bereitsteht.

Die in Fig. 1b erkennbare Keilwellenprofilverbindung sollte möglichst luftdicht sein, damit beim pneumatischen Beaufschlagen der Rückseite 29 der Spindel keine nennenswerten pneumatischen Verluste entstehen.

Mit einem Werkzeugtreiberaggregat gemäß dem vorstehend beschriebenen Ausführungsbeispiel lassen sich im Hochdurchsatzbetrieb durchaus fünf und ggf. mehr Gewinde pro Sekunde formen.

Die in den Figuren 1 a und 1 b gezeigte Ausführungsform kann auch zum Gewindeschneiden herangezogen werden, wobei anstelle des Gewindeformers 13 ein Gewindeschneidbohrer zum Einsatz käme.

Es sei darauf hingewiesen, dass das Werkzeugtreiberaggregat nach der Erfindung in ein Werkstückbearbeitungszentrum mit weiteren Bearbeitungsvorrichtungen, etwa Stanzvorrichtungen, Biegevorrichtungen oder dgl., integriert sein kann.

## Patentansprüche

1. Werkzeugtreiberaggregat, insbesondere für den Antrieb eines Gewindefertigungswerkzeugs (13) in einer Gewindefertigungsvorrichtung, umfassend eine axial verschiebbar in einem Treibergehäuse gelagerte Spindel (7) als Halteelement für das Werkzeug (13), eine Drehantriebseinrichtung (3, 5) für die Spindel (7) und eine Axialvorschub- und Rückholeinrichtung (27) für die Spindel (7), wobei die Axialvorschub- und Rückholeinrichtung einen pneumatischen oder hydraulischen Zylinder-Kolben-Antrieb mit der Spindel (7) als Kolbenteil aufweist, wobei eine axial rückwärtige Seite (29) der Spindel (7) eine Zylinderkammer (31) des Zylinder-Kolben-Antriebs begrenzt, so dass die Spindel (7) an ihrer rückwärtigen Seite (29) mit dem Druck eines der Zylinderkammer (31) zuzuführenden Druckmediums zu beaufschlagen ist, um einen Spindelvorschub zu erzeugen, und ferner umfassend eine mit einer Pumpe für das Druckmedium in Verbindung stehende pneumatische oder hydraulische Steuereinrichtung (35), mittels welcher das Druckmedium in die Zylinderkammer (31) gepumpt werden kann,
**dadurch gekennzeichnet, dass** mittels der Steuereinrichtung (35) das Druckmedium auch aus der Zylinderkammer (31) gesaugt werden kann, um einen die Spindel (7) zur axialen Rückwärtsbewegung veranlassenden Unterdruck in der Zylinderkammer (31) zu erzeugen, wobei der Unterdruck in der Zylinderkammer (31) kleiner ist als der außen an einer Werkzeugaufnahmeseite der Spindel (7) wirkende Luftdruck.

2. Werkzeugtreiberaggregat nach Anspruch 1, wobei die Drehantriebseinrichtung (3, 5) eine zur Rotation angetriebene Drehmitnahmehülse (5) aufweist, die mit der Spindel (7) zur gemeinsamen Drehung gekoppelt ist, wobei die Drehmitnahmehülse (5) als Zylinderteil des Zylinder-Kolben-Antriebs der Axialvorschub- und Rückholeinrichtung (27) die Spindel (7) axial bewegbar lagert.

3. Werkzeugtreiberaggregat nach einem der vorhergehenden Ansprüche, wobei die Spindel (7) und die Drehmitnahmehülse (5) einander komplementäre und miteinander in Drehmitnahmeeingriff stehende Keilwellenverzahnungen (23, 25) oder Polygonbereiche haben.

4. Werkzeugtreiberaggregat nach einem der vorhergehenden Ansprüche, wobei die Drehantriebseinrichtung einen Hohlwellenelektromotor (3), insbesondere NC-Motor, als Antriebsquelle aufweist und wobei die als Hohlwelle (5) ausgebildete Motorwelle die Drehmitnahmehülse ist.

5. Werkzeugtreiberaggregat nach einem der vorhergehenden Ansprüche, wobei die Drehantriebsvorrichtung (3, 5) so steuerbar ist, dass der Drehsinn der Spindel (7) wechselweise änderbar ist.

6. Werkzeugtreiberaggregat nach Anspruch 5, wobei Wechsel zwischen Vorschubbewegung und Rückzugsbewegung der Spindel (7) mit einer jeweiligen Umkehrung des Drehsinns der Spindel (7) zumindest näherungsweise synchronisierbar sind.

7. Werkzeugtreiberaggregat nach einem der vorhergehenden Ansprüche, wobei die Spindel (7) auswechselbar in dem Treibergehäuse aufgenommen- und durch herausziehen aus ihrer Axialführung aus dem Treibergehäuse entfernbar ist.

8. Werkzeugtreiberaggregat nach einem der vorhergehenden Ansprüche, wobei wenigstens ein Magnet (39) in oder an dem Treibergehäuse so vorgesehen ist, dass er mit der Spindel (7) magnetisch wechselwirken kann, um sie am Herausfallen aus dem Treibergehäuse zu hindern.

9. Werkzeugtreiberaggregat nach einem der vorhergehenden Ansprüche, wobei die Spindel (7) eine Wechselspannvorrichtung (11) für das Werkzeug (13) aufweist.

10. Werkzeugtreiberaggregat nach einem der Ansprüche 1 bis 8, wobei die Spindel integraler Bestandteil des Werkzeugs ist.

11. Werkzeugtreiberaggregat nach einem der vorhergehenden Ansprüche, wobei das Werkzeug (13) ein Gewindeformer ist.

## Claims

1. A tool driver unit, in particular for driving a thread-production tool (13) in a thread-production apparatus, comprising a spindle (7) mounted axially displaceably in a driver housing as a retaining element for the tool (13), a rotating drive device (3,5) for the spindle (7) and an axial feed and return device (27) for the spindle (7), wherein the axial feed and return device has a pneumatic or hydraulic cylinder-piston drive with the spindle (7) as the piston part, wherein an axially rearward side (29) of the spindle (7) delimits a cylinder chamber (31) of the cylinder-piston drive so that on its rearward side (29) the spindle (7) is to be acted upon with the pressure of a pressure medium to be supplied to the cylinder chamber (31) so as to generate a spindle feed, and further comprising a pneumatic or hydraulic control device (35) which is in communication with a pump for the pressure medium and by means of which the pressure medium can be pumped into the cylinder chamber (31),
**characterised in that** by means of the control device (35) the pressure medium can also be aspirated from the cylinder chamber (31) so as to create in the cylinder chamber (31) an underpressure inducing an axial reverse movement in the spindle (7), wherein the underpressure in the cylinder chamber (31) is lower than the atmospheric pressure acting externally on a tool-receiving side of the spindle (7).

2. A tool driver unit according to Claim 1, wherein the rotating drive device (3,5) has a rotary driving sleeve (5) which is coupled to the spindle (7) for joint rotation, wherein the spindle (7) is axially movably mounted by the rotary driving sleeve (5) as a cylindrical part of the cylinder-piston drive of the axial feed and return device (27).

3. A tool driver unit according to any one of the preceding Claims, wherein the spindle (7) and the rotary driving sleeve (5) have splined-shaft teeth (23,25) or polygonal regions which are mutually complementary and are in rotation-entraining engagement with one another.

4. A tool driver unit according to any one of the preceding Claims, wherein the rotating drive device has a hollow shaft electric motor (3), in particular an NC motor, as drive source, and wherein the motor shaft in the form of a hollow shaft (5) is the rotary driving sleeve.

5. A tool driver unit according to any one of the preceding Claims, wherein the rotating drive device (3,5) can be controlled in such a way that the direction of rotation of the spindle (7) is alternately variable.

6. A tool driver unit according to Claim 5, wherein the alternation between the forward movement and return movement of the spindle (7) can be synchronised at least approximately with a respective reversal of the direction of rotation of the spindle (7).

7. A tool driver unit according to any one of the preceding Claims, wherein the spindle (7) is accommodated interchangeably in the driver housing and can be removed from the driver housing by withdrawal from its axial guide.

8. A tool driver unit according to any one of the preceding Claims, wherein at least one magnet (39) is provided in or on the driver housing so that it can interact magnetically with the spindle (7) so as to prevent it from the falling out of the driver housing.

9. A tool driver unit according to any one of the preceding Claims, wherein the spindle (7) has an alternating clamping device (11) for the tool (13).

10. A tool driver unit according to any one of Claims 1 to 8, wherein the spindle is an integral component of the tool.

11. A tool driver unit according to any one of the preceding Claims, wherein the tool (13) is a thread-forming tool.

## Revendications

1. Ensemble d'actionnement pour un outil, notamment pour actionner un outil pour le finissage des filets (13) dans un dispositif de finissage des filets, comprenant une broche (7) logée de manière mobile dans le sens axial dans un boîtier d'actionnement et servant d'élément de retenue pour l'outil (13), un dispositif d'entraînement en rotation (3, 5) pour la broche (7) et un dispositif d'avance axiale et de rappel (27) pour la broche (7), le dispositif d'avance axiale et de rappel (27) présentant un entraînement à piston et cylindre pneumatique ou hydraulique avec la broche (7) servant de partie de piston, sachant qu'un côté arrière dans le sens axial (29) de la broche (7) délimite une chambre de cylindre (31) de l'entraînement à piston et cylindre de sorte que la broche (7) est à mettre sous pression d'un agent de pressurisation qui doit être amené à la chambre de cylindre (31) sur son côté arrière (29) afin de générer une avance de broche, et comprenant de plus un dispositif de commande (35) pneumatique ou hydraulique en liaison avec une pompe pour l'agent de pressurisation, à l'aide de laquelle ce dernier peut être pompé dans la chambre de cylindre (31),
**caractérisé en ce que** l'agent de pressurisation peut aussi être aspiré par le dispositif de commande depuis la chambre de cylindre (31) afin de générer une dépression poussant la broche (7) à se déplacer en arrière dans le sens axial dans la chambre de cylindre (31), la dépression dans la chambre de cylindre (31) étant inférieure à la pression d'air agissant à l'extérieur sur un côté de logement de l'outil de la broche (7).

2. Ensemble d'actionnement pour un outil selon la revendication 1, dans lequel le dispositif d'entraînement en rotation (3, 5) présente une douille d'entraînement en rotation entraînée en rotation et couplée à la broche (7) pour une rotation commune, sachant que la douille d'entraînement en rotation (5) en tant que partie de cylindre de l'entraînement à piston et cylindre du dispositif d'avance axiale et de rappel (27) loge la broche (7) de manière mobile dans le sens axial.

3. Ensemble d'actionnement pour un outil selon l'une quelconque des revendications précédentes, dans lequel la broche (7) et la douille d'entraînement en rotation (5) présentent des dentures d'arbre cannelé (23, 25) ou des zones polygonales complémentaires et en engagement d'entraînement en rotation les unes avec les autres.

4. Ensemble d'actionnement pour un outil selon l'une quelconque des revendications précédentes, dans lequel le dispositif d'entraînement en rotation présente un moteur électrique à arbre creux (3), en particulier un moteur à commande numérique, comme source d'entraînement et dans lequel, l'arbre de moteur réalisé comme un arbre creux (5) est la douille d'entraînement en rotation.

5. Ensemble d'actionnement pour un outil selon l'une quelconque des revendications précédentes, dans lequel le dispositif d'entraînement en rotation (3, 5) peut être commandé de sorte que le sens de rotation de la broche (7) puisse être modifié alternativement.

6. Ensemble d'actionnement pour un outil selon la revendication 5, dans lequel le changement entre le mouvement d'avance et le mouvement de rappel de la broche (7) peut être synchronisé au moins approximativement en inversant respectivement le sens de rotation de la broche (7).

7. Ensemble d'actionnement pour un outil selon l'une quelconque des revendications précédentes, dans lequel la broche (7) est logée de manière interchangeable dans le boîtier d'actionnement et peut être retirée du boîtier d'actionnement par extraction de son guidage axial.

8. Ensemble d'actionnement pour un outil selon l'une quelconque des revendications précédentes, sachant qu'au moins un aimant (39) est prévu dans ou sur le boîtier d'actionnement de sorte qu'il puisse interagir magnétiquement avec la broche (7) afin d'empêcher qu'elle ne tombe du boîtier d'actionnement.

9. Ensemble d'actionnement pour un outil selon l'une quelconque des revendications précédentes, dans lequel la broche (7) présente un dispositif de serrage interchangeable (11) pour l'outil (13).

10. Ensemble d'actionnement pour un outil selon l'une quelconque des revendications 1 à 8, dans lequel la broche fait partie intégrante de l'outil.

11. Ensemble d'actionnement pour un outil selon l'une quelconque des revendications précédentes, dans lequel l'outil (13) est un dispositif à mouler les filets.
